Europäisches Patentamt

(19) European Patent Office

Office européen des brevets

(11) Numéro de publication: **0 111 365**
**B1**

## (12) FASCICULE DE BREVET EUROPÉEN

(45) Date de publication du fascicule du brevet:
10.08.88

(21) Numéro de dépôt: **83201701.6**

(22) Date de dépôt: **01.12.83**

(51) Int. Cl.⁴: **H 02 M 3/335**

(54) **Alimentation à découpage à deux états.**

(30) Priorité: **10.12.82 FR 8220742**

(43) Date de publication de la demande:
**20.06.84 Bulletin 84/25**

(45) Mention de la délivrance du brevet:
**10.08.88 Bulletin 88/32**

(84) Etats contractants désignés:
**BE DE FR GB IT**

(56) Documents cité:
**DE-A-2 620 191**
**DE-A-2 624 965**

**ELECTRONIQUE APPLICATIONS, no. 24, juin-juillet 1982 (PARIS, FR) "Composants nouveaux pour alimentations à découpage", pages 123-124**

(73) Titulaire: **S.A. La Radiotechnique Industrielle et Commerciale, 51 Rue Carnot, F-92150 Suresnes (FR)**
(84) Etats contractants désignés: **FR**

(73) Titulaire: **N.V. Philips' Gloeilampenfabrieken, Groenewoudseweg 1, NL- 5621 BA Eindhoven (NL)**
(84) Etats contractants désignés: **BE DE GB IT**

(72) Inventeur: **Houee, Yves, S.P.I.D. 209 rue de l'Université, F-75007 Paris (FR)**
Inventeur: **Vacher, Pierre, S.P.I.D. 209 rue de l'Université, F-75007 Paris (FR)**

(74) Mandataire: **Caron, Jean, SOCIETE CIVILE S.P.I.D. 209, rue de l'Université, F-75007 Paris (FR)**

EP 0 111 365 B1

**0 111 365**

## Description

L'invention concerne un circuit d'alimentation à découpage, comprenant une première et une seconde source de tension, chacune étant connectable respectivement à une première et une seconde borne de sortie, et des premiers moyens de régulation pour agir sur le découpage quand une tension excède une première valeur de référence, ledit circuit d'alimentation étant capable de travailler à la demande soit dans un premier état dans lequel la première source de tension connectée à la première borne de sortie lui fournit une première tension et la seconde source de tension connectée à la seconde borne de sortie y applique une seconde tension qui est plus grande que la première tension, soit dans un second état dans lequel la tension appliquée à la première borne est pratiquement la même que dans le premier état, cependant que la tension appliquée à la seconde borne est plus petite que celle qui lui est appliquée dans le premier état.

Des circuits du type concerné par l'invention sont employés en particulier dans les téléviseurs munis d'une télécommande. Ils peuvent être dans deux états correspondant soit à la marche normale du téléviseur, soit au régime dit de veille, dans lequel les circuits récepteurs des ordres de télécommande restent alimentés normalement, alors que les autres circuits sont alimentés sous tension réduite ou même ne sont plus alimentés du tout.

Dans des circuits très répandus, on utilise deux alimentations secteur séparées, une pour les circuits récepteurs de télécommande, une autre pour le reste du téléviseur. Ce système est coûteux puisqu'il nécessite deux alimentations distinctes.

Dans un autre circuit très répandu, une alimentation à découpage unique est utilisée, et les tensions autres que celle qui alimente le récepteur de télécommande sont coupées, grâce à des commutateurs, pendant l'état de veille. Il faut alors prévoir la coupure en charge de plusieurs tensions et courants élevés, ce qui nécessite une pluralité d'interrupteurs de haute fiabilité, donc coûteux.

Le brevet allemand DE-A-2 620 191 fait connaître un circuit plus satisfaisant, dans lequel un des enroulements d'un transformateur d'alimentation à découpage est bobiné en sens inverse des autres. De ce fait, les tensions issues de cet enroulement ne dépendent pas du rapport cyclique de découpage. En faisant varier ce rapport, il est donc possible de réduire les autres tensions sans modifier celle issue dudit enroulement, qui est utilisée pour alimenter le circuit récepteur de télécommande. Ce système présente toutefois l'inconvénient que la tension issue de l'enroulement inversé n'est pas stabilisée par le système global de stabilisation, et qu'il est alors nécessaire de prévoir un circuit stabilisateur supplémentaire en série dans le cas usuel où la tension du secteur peut varier dans des proportions importantes et surtout avec la tendance actuelle selon laquelle les téléviseurs peuvent être branchés sans commutation sur tous les secteurs de 90 à 250 volts. Ce circuit stabilisateur, outre son coût, a l'inconvénient d'augmenter la consommation dans l'état de veille.

L'objet du circuit selon l'invention est de fournir une alimentation qui ne présente aucun des inconvénients mentionnés ci-dessus.

Un circuit selon l'invention est caractérisé en ce qu'il comprend, en outre, des seconds moyens de régulation pour fournir un signal qui agit sur l'opération de découpage pour réduire toutes à la fois dans un même rapport les valeurs des tensions fournies quand une tension dépasse une seconde référence de tension et un dispositif pour choisir le premier ou le second état, en commandant un premier et un second moyen de commutation, ledit premier moyen de commutation reliant la seconde source de tension dans le premier état au premier moyen de régulation, et dans le second état au second moyen de régulation, et ledit second moyen de commutation reliant la première borne de sortie, dans le premier état à la première source de tension, et dans le second état à la seconde source de tension.

Dans une autre forme de réalisation comportant plus de deux sources de tension, le problème est résolu par un circuit ayant les caractéristiques de la revendication 2.

Un limiteur de courant est avantageusement utilisé avec les moyens de commutation. Ce limiteur est avantageusement d'un type commandable.

L'avantage de l'invention est qu'elle permet de réduire toutes les tensions, sauf une, au moyen d'un unique interrupteur dans lequel ne passent pas de courants élevés, toutes les tensions restant stabilisées en permanence par le circuit unique de stabilisation.

La description qui va suivre, en regard des dessins annexés décrivant des exemples non limitatifs, fera bien comprendre comment l'invention peut être réalisée.

Les figures 1 à 5 représentent schématiquement différentes forme de réalisation de l'invention.

La figure 6 représente un schéma détaillé d'une forme de réalisation préférée.

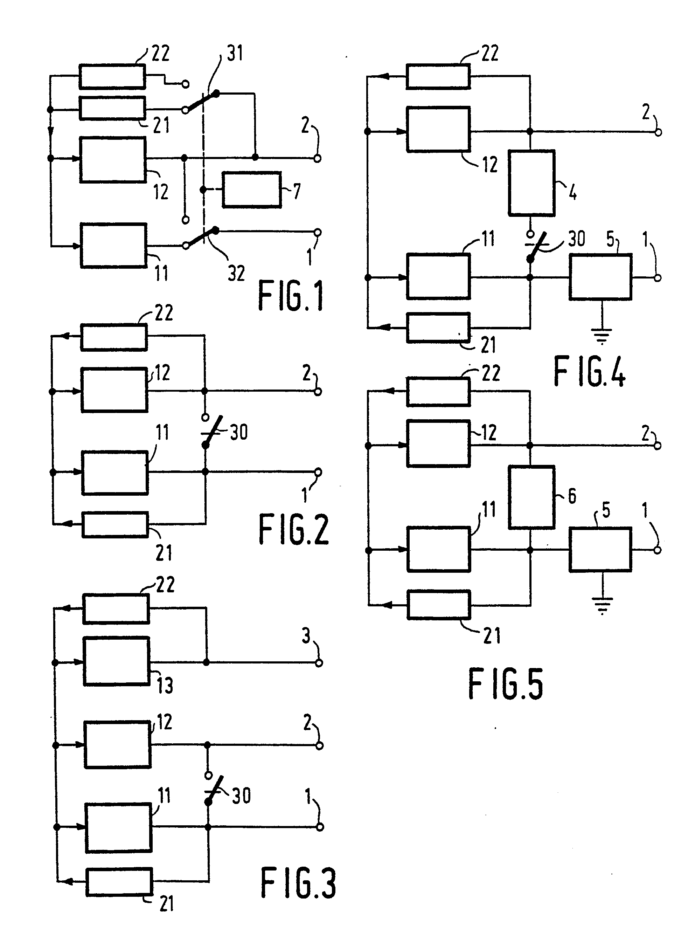

L'invention peut être mis en oeuvre au moyen du circuit de la figure 1. Ce circuit permet de modifi simultanément diverses tensions fournies à plusieurs bornes d'une alimentation à découpage munie c plusieurs sources de tension, ces tensions étant modifiées éventuellement dans un sens ou dans d proportions différentes selon les bornes considérées. Pour obtenir cet effet, on modifie les tensions d sources toutes à la fois dans un même rapport au moyen d'un inverseur qui sélectionne au choix un circuit régulation, et, en même temps, on remplace au moins une connexion entre une borne et une source par u connexion entre cette même borne et une autre source au moyen d'un autre inverseur. Ainsi, la tension de l' des bornes est modifiée dans un rapport qui dépend des circuits de régulation, alors que la tension d'une au borne est modifiée dans un rapport différent, et même éventuellement dans un sens différent, puisqu source qui l'alimente a changé.

Le circuit d'alimentation à découpage de la figure 1 est prévu pour fonctionner à la demande de deux éta

2

est muni de deux sources de tension 11, 12, de deux bornes de sortie d'alimentation 1, 2 et de premiers moyens de régulation 21 pour délivrer un signal qui agit sur le découpage pour diminuer ensemble les tensions fournies par les sources lorsqu'une tension dépasse une première valeur de consigne. Il est muni, en outre, de deuxièmes moyens de régulation 22 pour délivrer un signal agissant sur le découpage pour diminuer ensemble les valeurs des tensions fournies lorsqu'une tension dépasse une deuxième valeur de consigne, et il est également muni:

- de premier éléments de commutation 31 pour relier une des sources de tension 12, à la demande, soit aux premiers moyens 21, soit aux deuxièmes moyens 22,
- de deuxièmes éléments de commutation 32 pour relier une borne de sortie 1, soit à l'une (11), soit à l'autre (12) source de tension,
- et d'un dispositif 7 commandant simultanément les premier et deuxième éléments de commutation, pour sélectionner l'état désiré.

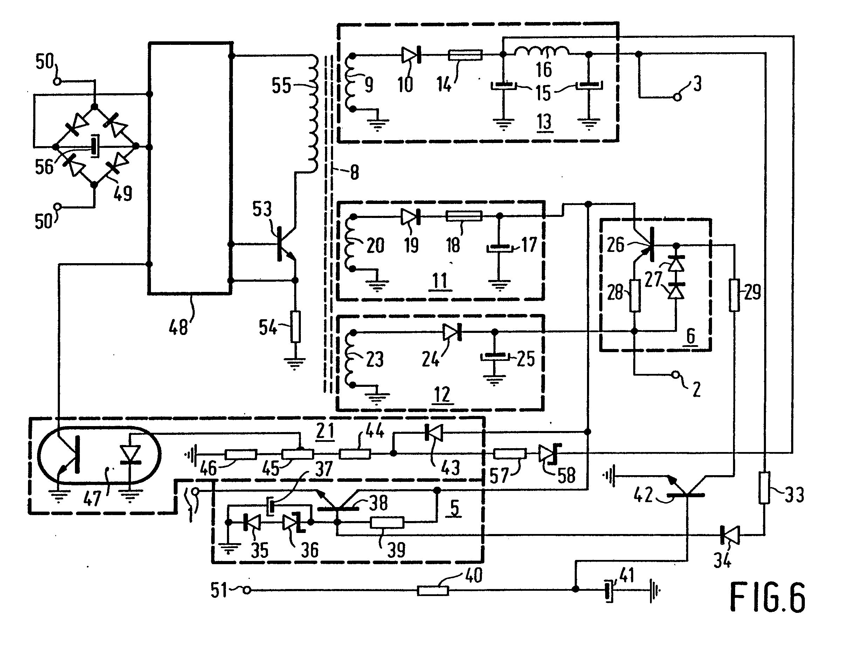

Une variante avantageuse peut être mise en oeuvre au moyen du circuit de la figure 2. Dans cette variante, le circuit de régulation 21 est relié à la source 11. La source 12 fournit une tension plus élevée que la source 11. Ainsi, lorsqu'on ferme l'interrupteur 30 servant d'élément de commutation, le circuit de régulation 21 est connecté à la source 12 et, de ce fait, cette dernière prend la tension qu'avait auparavant la source 11, et la tension de la source 11 est abaissée dans la même proportion mais elle ne débite plus puisque la tension qu'elle peut fournir est inférieure à celle présente sur sa sortie. Ainsi qu'il est d'usage, l'alimentation 11 peut comporter au moins une diode (19, figure 6) qui empêche un courant d'entrer dans la source de tension si la tension à ses bornes est plus élevée que celle qu'elle peut délivrer. On modifie donc les tensions des sources toutes à la fois dans un même rapport en branchant par le commutateur 30 le circuit de régulation 21 sur la source 12 au lieu de la source 11 et, en même temps, on relie entre elles deux sources de tension 11 et 12, au moyen de ce même commutateur 30.

Le circuit d'alimentation à découpage de la figure 2 peut donc fonctionner à la demande dans deux états:
- soit dans un premier état où la première source ce de tension 11, reliée à une première borne de sortie 1, fournit à cette borne une première tension, et la deuxième source 12, reliée à une deuxième borne de sortie 2, fournit à cette borne une deuxième tension supérieure à la première,
- soit dans un deuxième état où est fournie à la première borne 1, une tension supérieure ou égal à celle qui lui est fournie dans le premier état, cependant qu'à la deuxième borne 2 est fournie une tension inférieure à celle qui lui est fournie dans le premier état.

Les premiers moyens de régulation 21 délivrent un signal lorsqu'une tension fournie dépasse une valeur de consigne, ce signal agissant sur le découpage pour diminuer ensemble les valeurs des tensions fournies. Ces moyens 21 sont reliés à la borne 1 et le circuit est muni d'éléments de commutation 30 pour mettre le circuit dans le deuxième état en reliant, à la demande, la borne 1 à la deuxième source de tension 12.

Supposons par exemple que les sources de tension 11 et 12 soient conçues pour que la source 12 fournisse une tension triple de celle fournie par 11 et que les moyens 21 limitent les tensions fournies lorsque la tension de la source 11 dépasse la valeur de consigne 5 volts. A ce moment, la source 12 fournit 15 volts. Si on ferme l'interrupteur 30, les moyens 21 reliés à la source 12 limitent la tension de cette source à 5 volts. La source 11 ne peut plus fournir que le tiers de 5 volts et ne débite plus. Les deux bornes 1 et 2 reliées ensemble sont maintenant alimentées sous 5 volts. La tension de la borne 2 reçoit une tension (5 volts, inférieure à celle (15 volts) qu'elle avait dans le premier état, cependant qu'une tension de 5 volts est fournie à la borne 1 et est égale àcelle qu'elle recevait dans le premier état.

On peut aussi prévoir des deuxièmes moyens de régulation 22, reliés en permanence à la deuxième source de tension, pour délivrer un signal de limitation lorsqu'une tension fournie dépasse une deuxième valeur de consigne. Supposons que dans l'exemple ci-dessus, ces moyens agissent pour une tension de 12 volts. Dans le premier état, la source 12 ne pourra donc fournir plus de 12 volts à la borne 2 et la source 11 fournit le tiers, soit 4 volts à la borne 1. Dans le deuxième état, les moyens 21 limitent à 5 volts la tension de la source 12. La borne 2 reçoit donc la tension inférieure (5 volts) à celle qu'elle avait dans le premier état (12 volts), cependant que la borne 1 reçoit une tension (5 volts) supérieure à celle (4 volts) qu'elle avait dans le premier état.

Ainsi que le présente la figure 3, il es possible aussi de prévoir plusieurs deuxièmes sources 12, 13 reliées à plusieurs deuxièmes bornes 2, 3 leur fournissant des tensions dont au moins une (12) dite haute, est supérieure à la première tension de la première source 11. Les éléments de commutation 30 relient, à la demande, la borne 1 à la source 12. Par exemple, les tensions fournies par la source 12 sont six fois plus élevées et celles fournies par la source 13 sont trois fois plus élevées que celles fournies par la source 11. Les moyens 21 reliés à la borne 1 limitent les tensions lorsqu'une tension fournie dépasse la valeur de consigne 5 volts, et des moyens 22 reliés à la borne 3 limitent les tensions lorsqu'une tension fournie dépasse la valeur de consigne 14 volts. L'interrupteur 30 étant ouvert, on trouve, grâce à l'action des moyens 22, quatorze volts sur la borne 3 et sur les bornes 1 et 2 des tensions dans les rapports prévus, soit respectivement 4, 66 et 28 volts. Les moyens 21 n'agissent pas puisque la tension sur la borne 1 est inférieure à 5 volts. Si on ferme l'interrupteur 30, les moyens 21 agissent et limitent à 5 volts la tension sur les bornes 1 et 2 réunies. Alors, la source 11 fournit 0,8 volt et ne débite pas, et la source 13 fournit 2,5 volts. Les moyens 22 n'agissent plus. Des circuits (non représentés) alimentés par les bornes 2 et 3 voient leur tension considérablement diminuer dans un rapport 5,6 pour l'exemple ci-dessus, tandis que l'alimentation des circuits de veille alimentés par la borne 1 n'est pas modifiée, ou légèrement augmentée.

Si on supprime les moyens 22, par exemple dans le circuit de la figure 3, les tensions respectives sur les

**0 111 365**

bornes 1, 2, 3 deviennent pour le premier état 5; 30; 15 volts et pour le deuxième état 5; 5; 2,5 volts. Dans le deuxième état, il n'y a donc aucun changement. La fonction des moyens 22 est d'obtenir que, dans le premier état, ce soit la tension de la borne à laquelle ils sont reliés qui soit régulée avec le plus de précision si les circuits qu'elle alimente ont particulièrement besoin d'une tension plus stable que les autres. Avec un circuit du genre représenté sur la figure 2, il est possible que le rapport des tensions entre la borne 2 à tension très stable régulée par les moyens 22 et la borne 1 reliée par exemple aux circuits récepteurs de télécommande ne permette pas d'obtenir une réduction de tension suffisante lors de la mise en oeuvre du procédé selon l'invention, et les moyens 22 sont alors de préférence reliés à une borne 3 différente de celle (2) à laquelle est reliée la première borne 1 dans le deuxième état, comme cela est réalisé dans le circuit de la figure 3.

Lorsque la borne 1 est reliée à la source de tension 12, il est à craindre que, avant que le changement dans la régulation ait pu agir, la borne 1 soit brièvement portée à une tension dangereuse pour les circuits qu'elle alimente. Ceci provient, en particulier, de la charge accumulée dans un condensateur (25, figure 6) que comporte la source de tension 12. Afin d'éviter des dégâts, il est donc avantageux de prévoir une limitation de courant, et éventuellement une limitation de la tension, pour la borne 1. La figure 4 indique comment, pour obtenir cet effet, un limiteur de courant 4 est inséré entre la source de tension 12 et la borne 1, en série avec l'élément de commutation 30. La figure 5 montre une disposition avantageuse dans laquelle l'ensemble des moyens de commutation 30 et du limiteur 4 a été réuni dans un limiteur de courant commandable 6 qui constitue alors les susdits moyens de commutation.

Dans les figures 4 et 5, la référence 5 indique un circuit limiteur de tension via lequel est assurée la liaison de la borne 1 vers les éléments de commutation 6 ou 30 et vers la source de tension 11. Ce circuit 5 ne constitue pas un stabilisateur de tension, mais a seulement pour rôle de limiter la tension à la borne 1 à une valeur compatible avec la sécurité des circuits.

La figure 6 représente en détail une réalisation préférée de l'invention qui correspond sensiblement au circuit de la figure 3, muni en outre des circuits 5 et 6 de la figure 5.

Les circuits 11, 12, 13, 21, 5, 6 des figures précédentes sont indiqués par des cadres en trait pointillé. Les moyens 21 et 22 utilisent une partie commune (44 à 47) pour agir sur le découpage et diminuer les valeurs des tensions fournies.

La tension du secteur est amenée sur des bornes 50; elle est redressée par des diodes 49 montées en pont et lissée par un condensateur 56 et la tension obtenue est appliquée à un circuit 48 connu qui commande le découpage. Ce circuit 48, qui comporte par exemple un circuit intégré TEA 1039 commercialisé par la Société RTC LA RADIOTECHNIQUE-COMPELEC et destiné à la commande et à la régulation des alimentations à découpage, fournit à un transistor de découpage 53 sa tension de commande de base et reçoit en retour une information sur le courant dudit transistor, mesuré par une résistance d'émetteur 54. L'enroulement primaire 55 d'un transformateur d'alimentation 8 est inséré dans le collecteur du transistor 53. Le circuit 48 reçoit aussi un signal d'un photocoupleur 47, signal agissant sur le découpage pour diminuer ensemble les valeurs des tensions fournies à des enroulements secondaires 9, 20, 23 du transformateur 8. Ce signal agit, de façon connue, en modifiant le facteur de forme des impulsions de commande appliquées à la base du transistor 53. Le photocoupleur assure l'isolation galvanique entre le secteur et les circuits du téléviseur. Les moyens 22 sont constitués par le photocoupleur 47 relié à une prise sur une chaîne de résistances 57, 44, 45, 46 dont une extrémité est reliée à la masse et l'autre à l'anode d'une diode Zener 58 dont la cathode est reliée à la source de tension 13. L'emplacement de la prise est choisi pour que la tension de la source 13 soit réglée a 14 volts.

Les moyens 21 sont constitués par les mêmes constituants 44 à 47 et une diode 43 dont la cathode est connectée au point commun des résistances 44 et 57, et dont l'anode est reliée à la source de tension 11. Les valeurs des résistances sont choisies pour que, lorsque les moyens 22 agissent par rapport à une tension de consigne 14 volts, les moyens 21 agissent pour une tension de l'ordre de 5, 5 volts. Les trois sources de tension positive 11, 12, 13 sont respectivement constituées chacune par un enroulement 20, 23, 9 du transformateur 8 qui alimente une diode de redressement 19, 24, 10, respectivement, et un condensateur de filtrage 17, 25, 15, respectivement. Des fusibles 14 et 18 peuvent être prévus. La source 13 comporte en outre une inductance 16 entre deux condensateurs 15. Ces trois sources de tension sont parfaitement connues de l'homme du métier. Les trois enroulements 20, 23, 9 sont bobinés dans le même sens par rapport à leur extrémité reliée à la masse de façon à fournir du courant inductif pendant les phases de blocage du transistor 53. Les rapports de nombres de tours des enroulements 9, 20, 23 sont tels que la source de tension 11 fournit environ 5 volts, lorsque la source de tension 13 fournit 14 volts (grâce à l'action des moyens 22) et la source de tension 12 fournit environ 30 volts. Chaque borne 1, 2, 3 est réunie respecivement à une sortie des sources de tension 11, 12, 13.

Les sources 11 et 12 sont réunies entre elles à la demande par le circuit 6. Celui-ci contient un transistor PNP 26 dont le collecteur est réuni à la source 11 et dont l'émetteur est réuni, via une résistance 28, à la source 12 et à la borne 2. Deux diodes 27 sont connectées en série entre la borne 2 et la base du transistor 26. Elles sont conductrices quand la borne 2 est positive par rapport à la base du transistor 26. Leur rôle est de limiter de façon connue le courant dans la résistance 28 à une valeur telle que la tension aux bornes de cette résistance soit sensiblement égale à la chute de tension directe aux bornes d'une diode. Ainsi, le circuit 6 constitue un limiteur de courant. Le transistor 26 est, par ailleurs, rendu conducteur à la demande lorsqu'un signal adéquat est appliqué à une borne 51. Un tel signal est positif et est appliqué via une cellule RC 40, 41 à la base d'un transistor NPN 42 dont l'émetteur est relié à la masse ce transistor devient conducteur et commande, via une résistance 29 placée entre son collecteur et la base du transistor 26, la conduction du transistor 26. Ce circuit RC 40, 41 a pour but de retarder légèrement la mise en conduction du circuit 6. Le circuit 6 est ainsi un

4

interrupteur à courant limité, commandable par un signal appliqué à la borne 51.

Entre la borne 1 et la source de tension 11 est inséré un circuit 5 limiteur de tension. Il est constitué par un transistor NPN 38 dont l'émetteur est connecté à la borne 1 et dont le collecteur est connecté à la source de tension 11. La base de ce transistor 38 est reliée à la masse par deux diodes tête-bêche 35, 36, la cathode de la diode 36 qui est une diode Zener étant du côté de la base. Le courant pour cette diode Zener est fourni par une résistance 39 reliant la cathode de la diode 36 à la source de tension 11, et également par une diode 34 en série avec une résistance 33, reliant la cathode de la diode Zener 36 à la source de tension 13. Un condensateur 37 de grande capacité, en parallèle avec les diodes 35, 36, permet d'obtenir une impédance dynamique plus faible.

Lorsqu'un signal positif est appliqué sur la borne 51, le transistor 26 devient conducteur et la source de tension 12 débite vers la borne 1, mais le courant est toutefois limité par la résistance 28. Il suffit cependant à rendre conductrice la diode 43, ce qui produit un signal transmis par le photocoupleur 47 qui diminue les tensions fournies, ceci jusqu'à ce que la tension de la source 12 soit descendue à environ 5,5 volts au lieu de 30 volts antérieurement. A ce moment, les tensions des sources 11 et 13 sont diminuées dans le même rapport. La source 11 ne peut plus fournir de courant puisque le condensateur 17 reste chargé à 5,5 volts par la liaison à la source 12, ce qui bloque la diode 19, et la source de tension 13 fournit environ 2,6 volts. Les appareils branchés aux bornes 2 et 3 qui recevaient respectivement 30 et 14 volts sont maintenant en état de veille avec une alimentation de respectivement 5, 6 et 2,6 volts, tandis que les circuits de télécommande reliés à la borne 1 sont toujours, eux, alimentés sous leur tension nominale de 5,5 à 5,6 volts.

Une réalisation du circuit de la figure 6 a donné de bons résultats avec les valeurs suivantes:

| Résistances | | | Semiconducteurs | |
|---|---|---|---|---|
| | 28 | 1Ω | 10 | BYV 95 A |
| | 29 | 1kΩ | 19 | BYW 95 A |
| | 33 | 1,2kΩ | 24 | BYW 95 A |
| | 39 | 180Ω | 26 | BD 234 |
| | 40 | 10Ω | 27 | 1 N 4148 |
| | 44 | 560Ω | 34 | 1 N 4148 |
| | 45 | POT.100Ω | 35 | 1 N 4148 |
| | 46 | 100Ω | 36 | BZX 79 B 5V6 |
| Résistances | 54 | 0,12Ω | Semiconducteurs | |
| | 57 | 120Ω | 38 | BD 433 |
| | | | 42 | BC 549 |
| | | | 43 | 1 N 4148 |
| Condensateurs | 15 | 1500µF | 47 | CNX 62 |
| | 17 | 4700µF | 49 | 4 X BYW 55 |
| | 25 | 680µF | 53 | BU 826 |
| | 37 | 1000µF | 58 | BZX 79 B 6V8 |
| | 41 | 6,8µF | | |
| | 56 | 150µF | | |

## Revendications

1. Circuit d'alimentation à découpage, comprenant une première et une seconde source de tension (11, 12), chacune étant connectable respectivement à une première et une seconde borne de sortie (1, 2) et des premiers moyens de régulation (21) pour agir sur le découpage pour réduire toutes à la fois dans un même rapport les valeurs des tensions fournies quand une tension dépasse une première valeur de consigne, ledit circuit d'alimentation étant capable de travailler à la demande soit dans un premier état dans lequel la première source de tension connectée à la première borne de sortie lui fournit une première tension et la seconde source de tension connectée à la seconde borne de sortie y applique une seconde tension qui est plus élevée que la première tension, soit dans un second état dans lequel la tension appliquée à la première borne est pratiquement la même que dans le premier état, cependant que la tension appliquée à la seconde borne est plus basse que celle qui lui est appliquée dans le premier état, caractérisé en ce que le circuit d'alimentation comprend, en outre, des seconds moyens de régulation (22) pour fournir un signal qui agit sur l'opération de découpage quand une tension dépasse une seconde tension de consigne et un dispositif (7) pour choisir le premier ou le second état, en commandant un premier et un second moyen de commutation, ledit premier moyen de commutation (31) reliant la seconde source de tension dans le premier état au premier moyen de régulation, et dans le second état au second moyen de régulation, et ledit second moyen de commutation (32) reliant la première borne de sortie, dans le premier état à la première source de tension, et dans le second état à la seconde source de tension.

2. Un circuit d'alimentation à découpage, pouvant travailler à la demande, soit dans un premier état dans lequel une première source de tension (11) connectée à une première borne de sortie (1) lui fournit une première tension et une ou plusieurs secondes sources de tension (12, 13) connectées à une ou plusieurs secondes bornes de sortie (2, 3) y appliquent une ou plusieurs secondes tensions dont une au moins dite haute (12) est plus élevée que la première tension, soit dans un second état dans lequel la tension appliquée à la première borne est plus élevée que ou égale à la tension dans le premier état, cependant que les tensions appliquées aux secondes bornes sont plus basses que celles qui leur sont appliquées dans le premier état, le circuit comprenant des moyens de régulation (21) pour agir sur le découpage quand une tension dépasse une valeur de consigne, caractérisé en ce que les moyens de régulation (21) abaissent les tensions des sources toutes à la fois dans un même rapport et sont connectés à la première borne de sortie, et en ce que des moyens de commutation (30) sont prévus pour faire passer le circuit dans le second état en connectant la première borne de sortie à la seconde source de tension dite haute (12).

3. Circuit, selon la revendication 2, caractérisé en ce que des seconds moyens de régulation (22) sont prévus pour ajuster dans le premier état une des secondes sources de tension (12, 13) à une valeur de tension qui est plus basse que celle qui serait obtenue si les premiers moyens de régulation (21) agissaient seuls, et en ce que ces seconds moyens de régulation sont connectés en permanence à cette seconde source de tension (12, 13).

4. Circuit, selon la revendication 3, caractérisé en ce que les seconds moyens de régulation (22) sont connectés en permanence à une (3) des secondes bornes autre que celle (2) à laquelle la première borne est connectée dans le second état.

5. Circuit, selon l'une quelconque des revendications 2 à 4, caractérisé en ce que lesdits moyens de commutation comportent un limiteur de courant (4, 6).

6. Circuit selon la revendication 5, caractérisé en ce que le limiteur de courant (6) est commandable.

7. Circuit selon l'une quelconque des revendications 1 à 6, caractérisé en ce qu'il comporte un limiteur de tension (5) connecté entre la première borne de sortie et les éléments de commutation.

## Patentansprüche

1. Geschaltete Speisespannungsschaltung mit einer ersten und einer zweiten Spannungsquelle (11, 12), die mit je einer ersten bzw. einer zweiten Ausgangsklemme (1, 2) verbindbar sind und mit ersten Regelmitteln (21) zum alle gleichzeitig in demselben Verhältnis verringern der Werte der gelieferten Spannungen, wenn eine Spannung einen ersten Sollwert überschreitet, wobei die genannte Speisespannungsschaltung auf Wunsch geeignet ist, entweder in einem ersten Zustand zu arbeiten, in dem die erste mit der ersten Ausgangsklemme verbundene Spannungsquelle derselbe eine erste Spannung liefert und die zweite mit der zweiten Ausgangsklemme verbundene Spannungsquelle dieser Klemme eine zweite Spannung zuführt, die höher ist als die erste Spannung, oder in einem zweiten Zustand, in dem die der ersten Klemme zugeführte Spannung nahezu dieselbe ist wie die in dem ersten Zustand, während die der zweiten Klemme zugeführte Spannung niedriger ist als die in dem ersten Zustand zugeführte Spannung, dadurch gekennzeichnet, dass die Speisespannungsschaltung ausserdem zweite Regelmittel (22) aufweist zum Liefern eines Signals zum Beeinflußen des Schaltvorganges, wenn eine Spannung einen zweiten Sollwert überschreitet sowie eine Anordnung (7) zum Wählen des ersten oder des zweiten Zustandes indem ein erstes oder ein zweites Schaltmittel angesteuert wird, wobei das genannte erste Schaltmittel (31) die zweite Spannungsquelle in dem ersten Zustand mit dem ersten Steuermittel und in dem zweiten Zustand mit dem zweiten Steuermittel verbindet und wobei das genannte zweite Schaltmittel (32) die erste Ausgangsklemme in dem ersten Zustand mit der ersten Spannungsquelle und in dem zweiten Zustand mit der zweiten Spannungsquelle verbindet.

2. Geschaltete Speisespannungsschaltung, die auf Wunsch entweder in einem ersten Zustand arbeiten kann, in dem eine erste mit einer ersten Ausgangsklemme (11) verbundene Spannungsquelle (11) derselben eine erste Spannung liefert und in dem eine oder mehrere mit einer oder mehreren zweiten Ausgangsklemmen (2, 3) verbundene zweite Spannungsquellen (12, 13) diesen Klemmen eine oder mehrere zweite Spannungen liefert bzw. liefern, von denen mindestens die genannte hohe (12) höher ist als die erste Spannung, oder in einem zweiten Zustand, in dem die der ersten Klemme zugeführte Spannung höher ist als oder ebenso hoch ist wie die Spannung in dem ersten Zustand, während die den zweiten Klemmen zugeführten Spannungen niedriger sind als diejenigen, die in dem ersten Zustand zugeführt werden, wobei die Schaltungsanordnung Regelmittel (21) aufweist zum Beeinflußen des Schaltvorganges, wenn eine Spannung einen Sollwert überschreitet, dadurch gekennzeichnet, dass die Regelmittel (21) die Spannungen der Quellen alle gleichzeitig in demselben Verhältnis verringern und mit der ersten Ausgangsklemme verbunden sind und dass Schaltmittel (30) vorgesehen sind um die Schaltungsanordnung in den zweiten Zustand zu bringen indem die erste Ausgangsklemme mit der zweiten Quelle der als hoch bezeichneten Spannung (12) verbunden wird.

3. Schaltungsanordnung nach Anspruch 2, dadurch gekennzeichnet, dass zweite Regelmittel (22) vorgesehen sind zum in dem ersten Zustand Einstellen einer der zweiten Spannungsquellen (12, 13) auf einen Spannungswert, der niedriger ist als derjenige, der erhalten würde wenn nur die ersten Regelmittel (21) wirksam wären und dass die zweiten Regelmittel ständig mit dieser zweiten Spannungsquelle (12, 13) verbunden sind.

4. Schaltungsanordnung nach Anspruch 3, dadurch gekennzeichnet, dass die zweiten Regelmittel (22) ständig mit einer (3) der zweiten Klemmen verbunden sind und zwar mit einer anderen als derjenigen (2), mit der die erste Klemme in dem zweiten Zustand verbunden ist.

5. Schaltungsanordnung nach einem der Ansprüche 2 bis 4, dadurch gekennzeichnet, dass die genannten Schaltmittel einen Strombegrenzer (4, 6) aufweisen.

6. Schaltungsanordnung nach Anspruch 5, dadurch gekennzeichnet, dass der Strombegrenzer (6) steuerba ist.

7. Schaltungsanordnung nach einem der Ansprüche 1 bis 6, dadurch gekennzeichnet, dass sie einen zwischen der ersten Ausgangsklemme und den Schaltelementen liegenden Spannungsbegrenzer (5) aufweist.

**Claims**

1. A switched mode power supply circuit, comprising a first and a second voltage source (11, 12), each connectable to a first and to a second output terminal (1, 2), respectively, and first regulating means (21) for acting on the switching operation for reducing all the values of the voltages supplied in the same ratio at the same time when a voltage exceeds a first reference value, said power supply circuit being capable of operation on request either in a first state in which the first voltage source connected to the first output terminal applies thereto a first voltage and the second voltage source connected to the second output terminal applies thereto a second voltage which is of a higher value than the first voltage, or in a second state in which the voltage applied to the first terminal is substantially the same as in the first state, whereas the voltage applied to the second terminal is of a lower value than the voltage applied to it in the first state, characterized in that the power supply circuit furthermore includes second regulating means (22) for supplying a signal which acts on the switching operation when a voltage exceeds a second reference value and a device (7) for selecting the first or the second state, by controlling a first and a second change-over means, said first change-over means (31) connecting in the first state the second voltage source to the first regulating means, and in the second state to the second regulating means, and said second switching means (32) connecting the first output terminal, in the first state to the first voltage source, and in the second state to the second voltage source.

2. A switched-mode power supply circuit capable on request operating either in a first state in which a first voltage source (11) connected to a first output terminal (1) applies thereto a first voltage and one or a plurality of second voltage sources (12, 13) connected to one or a plurality of second output terminals (2, 3) apply thereto a second voltage of which at least one voltage, denoted high voltage (12) is higher than the first voltage, or in a second state in which the voltage applied to the first terminal is higher than or equal to the voltage in the first state, while the voltages applied to the second terminals are lower than those applied in the first state, the circuit comprising regulating means (21) for acting on the switching operation when a voltage exceeds a reference voltage, characterized in that the regulating means (21) reduce all the voltages from the sources in the same ratio at the same time and are connected to the first output terminal, and in that the change-over means (30) are provided to cause the circuit to change to the second state by connecting the first output terminal to the so-called high voltage source.

3. A circuit as claimed in Claim 2, characterized in that second regulating means (22) are provided for in the first state adjusting one of the second voltage sources (12, 13) to a voltage value which is lower than that which would be obtained when the first regulating means (21) would operate alone, and in that these second regulating means are permanently connected to this second voltage source (12, 13).

4. A circuit as claimed in Claim 3, characterized in that the second regulating means (22) are permanently connected to one (3) of the second terminals other than that (2) to which the first terminal is connected in the second state.

5. A circuit as claimed in anyone of the Claims 2 to 4, characterized in that said change-over means include a current limiter (4, 6).

6. A circuit as claimed in Claim 5, characterized in that the current limiter (6) is controllable.

7. A circuit as claimed in anyone of the Claims 1 to 6, characterized in that it includes a voltage limiter (5) which is connected between the first output terminal and the change-over elements.

FIG.1

FIG.2

FIG.3

F IG.4

F IG.5

FIG.6

0 111 365